# EUROPÄISCHE PATENTSCHRIFT

(11) **EP 1 740 806 B1**
(45) Veröffentlichungstag und Bekanntmachung des Hinweises auf die Patenterteilung: **03.06.2009**
(21) Anmeldenummer: 05747785.3
(22) Anmeldetag: 06.04.2005
(51) Int. Cl.: F02C 3/30, F02C 7/143, F04B 41/06, F25B 5/02, F04D 15/02

(54) **Verfahren zum kontinuierlichen Betreiben einer Flüssigkeitsfördervorrichtung**
Method for continuously operating a liquid conveying device
Procédé pour le fonctionnement en continu d'un dispositif de transport de liquide

(30) Priorität: 10.04.2004 DE 102004017682
(43) Veröffentlichungstag der Anmeldung: 10.01.2007
(73) Patentinhaber: Alstom Technology Ltd, 5400 Baden (CH)
(72) Erfinder: JIMENEZ HÄRTEL, Carlos, 81247 München (DE); OESTERLE, Stefan, CH-5300 Turgi (CH); REUMSCHÜSSEL, Carsten, 79639 Grenzach-Wyhlen (DE); SAVIC, Sasha, CH-5430 Wettingen (CH)
(86) Internationale Anmeldenummer: PCT/EP2005/051521
(87) Internationale Veröffentlichungsnummer: WO 2005/098217

(56) Entgegenhaltungen:
- EP-A- 1 203 866
- WO-A-20/04111413
- DE-A1- 2 850 589
- US-A- 3 744 932
- US-A- 4 951 475
- US-A- 5 970 728
- US-B1- 6 185 946
- US-B1- 6 419 454

## Beschreibung

### Technisches Gebiet,

Die Erfindung betrifft ein Verfahren gemäss dem Oberbegriff des Anspruchs 1.

### Stand der Technik

Gasturbogruppen, wie beispielsweise stationäre Gasturbinen als auch mobile Gasturbinen, sind heutzutage sowohl hinsichtlich des Wirkungsgrads als auch hinsichtlich der Leistung optimiert. Daher verfügen heutige Gasturbogruppen üblicherweise nur über sehr geringe, über die Nennleistung hinausreichende Leistungsreserven.

Um die Leistung über die Nennleistung zu steigern, kann Wasser oder eine sonstige geeignete Flüssigkeit durch Einspritzen oder Eindüsen in die Verdichterströmung der Gasturbine eingebracht werden. Die hierdurch erzielte Leistungssteigerung ist darin begründet, dass die Flüssigkeit nach der Eindüsung verdampft, wodurch der durch den Verdichter strömenden Luft Wärme entzogen wird. Dieser kontinuierlich ablaufende Verdampfungsvorgang stellt gleichsam eine kontinuierliche Zwischenkühlung der Verdichterströmung dar und führt dazu, dass zur Verdichtung der Verdichterströmung auf ein vorgegebenes Druckverhältnis eine geringere Verdichterarbeit aufzubringen ist, als dies ohne das Einbringen von Wasser erforderlich wäre. Gleichzeitig wird der Luftmassendurchsatz durch den Verdichter erhöht. Somit kann bei näherungsweise konstanter Brennkammeraustrittstemperatur in der Turbine der Gasturbine eine höhere Leistung umgesetzt und beispielsweise als Wellenleistung genutzt werden.

Solche Eindüsungen oder Einspritzungen von Wasser zur Leistungssteigerung einer Gasturbine sind beispielsweise aus den Patentschriften DE 25 49 790 oder auch FR 1 563 749 bekannt.

Die Eindüsung oder Einspritzung von Wasser kann vor dem Verdichter oder aber auch in einer der Verdichterstufen erfolgen. Aus Gründen der Einfachheit und Effizienz werden zur Eindüsung des Wassers neben hilfsmedienunterstützten Zerstäuberdüsen, wie beispielsweise luftunterstützten Zerstäuberdüsen, häufig Druckzerstäuberdüsen eingesetzt. Üblicherweise wird demineralisiertes Wasser eingedüst oder eingespritzt, das mittels einer oder mehrerer Pumpen aus einem Vorratsbehälter gepumpt und den Zerstäuberdüsen zugeführt wird. Die Pumpen fördern hierzu einen verhältnismäßig kleinen Massenstrom des einzubringenden Wassers auf einen hohen Druck. Zentrifugalpumpen sind für diese Betriebsweise ungeeignet, da diese bei den geforderten Betriebspunkten entweder gar nicht oder nur mit sehr schlechtem Wirkungsgrad betrieben werden können. Daher kommen hier zumeist Kolbenpumpen zum Einsatz. Jedoch müssen Kolbenpumpen aufgrund der hohen auf sie einwirkenden mechanischen Belastungen häufig gewartet werden und weisen somit nur vergleichsweise geringe Standzeiten auf. Auch ist die Gefahr eines unvorhergesehenen Ausfalls einer oder mehrerer der Kolbenpumpen sehr hoch. Infolgedessen müssen heutige Gasturbinen, die mit Wassereinspritzung ausgeführt sind, häufig heruntergefahren oder zumindest ohne leistungssteigernde Wassereinspritzung betrieben werden, um die Pumpen warten oder austauschen zu können. Aus DE 28 50 589 A1 und US-B1-6 419 454 ist jeweils ein Verfahren zum Betreiben einer Fördereinrichtung bekannt geworden, mit der ein Flüssigkeitsmassenstrom kontinuierlich gefördert wird, um den Flüssigkeitsmassenstrom in eine Hauptströmung einer Gasturbogruppe, insbesondere eine Eintrittsströmung eines-Verdichters der Gasturbogruppe, einzubringen. Die Fördervorrichtung weist eine Mehrzahl von parallel zueinander geschalteten Fördereinrichtungen auf, wobei der Flüssigmassenstrom zeitabschnittsweise und verteilend aus einem Ruhemodus geschaltet wird. Bei diesem Betriebsverfahren nach der letzt genannten Druckschrift erfolgt zwar ein Zu- und Abschalten, um den Verschleiss zu reduzieren. Diese Reduktion erweist sich indessen als nicht so nachhaltig, dass die Fördervorrichtung dauerhaft und ohne Unterbrechung betrieben werden kann.

### Darstellung der Erfindung

Hier will die Erfindung Abhilfe schaffen. Der Erfindung liegt somit die Aufgabe zugrunde, ein Verfahren der eingangs genannten Art anzugeben, mit welchen die Nachteile des Standes der Technik gemindert oder vermieden werden.

Die Erfindung trägt dazu bei, die Standzeiten von Fördervorrichtungen, mit denen eine Flüssigkeit, die in eine Hauptströmung eingebracht werden soll, gefördert wird, zu erhöhen.

Gemäß einem,weiteren Aspekt soll eine Wartung der Pumpen vorgenommen werden können, ohne den Betrieb der Fördervorrichtung unterbrechen zu müssen. Ferner soll in einem weiteren Aspekt die Möglichkeit geschaffen werden, bei Ausfall einer Pumpe die Fördervorrichtung weiterbetreiben zu können.

Diese Aufgabe wird erfindungsgemäß durch das Verfahren gemäss Anspruch 1 gelöst. Weitere vorteilhafte Ausgestaltungen der Erfindung finden sich in den abhängigen Ansprüchen.

Das Verfahren gemäß der Erfindung dient zum Betreiben einer Fördervorrichtung, mit der ein Flüssigkeitsmassenstrom kontinuierlich von einer Zulaufleitung in eine Förderleitung gefördert wird. Die Fördervorrichtung umfasst hierzu eine Mehrzahl Fördereinrichtungen, die parallel zueinander geschaltet sind. Parallel zueinander geschaltet bedeutet, dass mittels jeder der Fördereinrichtungen unabhängig von den anderen Fördereinrichtungen Flüssigkeit von der Zulaufleitung in die Förderleitung gefördert werden kann. Eine Fördereinrichtung kann dabei auch mehrere in Reihe geschaltete Förderelemente, beispielsweise Pumpen, umfassen. Verfahrensgemäß werden die Fördereinrichtungen wenigstens zwei Fördereinrichtungsgruppen zugeordnet. Zum Fördern des Flüssigkeitsmassenstroms werden die Fördereinrichtungsgruppen mit den jeweils zugeordneten Fördereinrichtungen rollierend zeitabschnittsweise aus einem Ruhemodus aktiv geschaltet, so dass in rollierender Reihenfolge je Zeitabschnitt jeweils wenigstens eine Fördereinrichtung in dem Ruhemodus betrieben wird. Dadurch, dass je Zeitabschnitt wenigstens eine Fördereinrichtung in dem Ruhemodus, beispielsweise einem Stand-By-Modus, betrieben wird, wird die Standzeit der Fördervorrichtung verlängert. Die Standzeit der Fördervorrichtung wird somit nicht mehr durch die Standzeiten der einzelnen Fördereinrichtungen limitiert, sondern kann über die Standzeiten der einzelnen Fördereinrichtung hinaus verlängert werden.

Ferner kann in demjenigen Zeitabschnitt, in dem eine Fördereinrichtung in dem Ruhemodus betrieben wird, diese Fördereinrichtung gewartet und/oder ausgetauscht werden. Somit ist es möglich, die Fördervorrichtung dauerhaft zu betreiben, ohne die Fördervorrichtung zur Wartung einzelner Fördereinrichtungen abschalten zu müssen.

Es zeigte sich, dass es besonderes zweckmäßig ist, das erfindungsgemäße Verfahren auf eine Fördervorrichtung, mit der ein Flüssigkeitsmassenstrom kontinuierlich gefördert wird, um den geförderten Flüssigkeitsmassenstrom in eine Hauptströmung einer Gasturbogruppe einzubringen, anzuwenden. In einer bevorzugten Ausführung der Fördervorrichtung wird der Flüssigkeitsmassenstrom hierbei in eine Eintrittsströmung eines Verdichters der Gasturbogruppe eingebracht. Ein bedeutender Vorteil der Anwendung des erfindungsgemäßen Verfahrens auf eine solche Fördervorrichtung besteht darin, dass der zeitliche Betrieb der Fördervorrichtung nicht mehr durch die Standzeiten der einzelnen Fördereinrichtungen limitiert ist. Die Fördervorrichtung kann demzufolge länger betrieben werden. Auch ist es nicht mehr erforderlich, die Fördervorrichtung zur Wartung und/oder zum Austauschen der Fördereinrichtungen herunterzufahren. Die Wartung und/oder ein Austausch der Fördereinrichtungen kann vorteilhaft nacheinander während des laufenden Betriebs der Fördervorrichtung vorgenommen werden, jeweils während die betroffene Fördereinrichtung in dem Ruhemodus betrieben wird.

Zweckmäßig umfasst eine jede der Fördereinrichtungen wenigstens eine Pumpe. Aufgrund der geforderten Betriebscharakteristik kommen hier vorzugsweise Kolbenpumpen zum Einsatz.
Innerhalb jeweils einer Fördereinrichtung können aber auch mehrere Pumpen oder auch andere Förderelemente in Reihe geschaltet sein.

In einer vorteilhaften Weiterbildung des Verfahrens werden die Fördereinrichtungsgruppen mit den jeweils zugeordneten Fördereinrichtungen zum Fördern des Flüssigkeitsmassenstroms einzeln nacheinander jeweils zu Beginn eines Zeitabschnitts aus dem Ruhemodus aktiv geschaltet und am Ende des Zeitabschnitts wieder in den Ruhemodus geschaltet. Alternativ können die Fördereinrichtungsgruppen mit den jeweils zugeordneten Fördereinrichtungen zum Fördern des Flüssigkeitsmassenstroms auch jeweils in Gruppen zu mehreren nacheinander jeweils zu Beginn eines Zeitabschnitts aus dem Ruhemodus aktiv geschaltet und am Ende des Zeitabschnitts wieder in den Ruhemodus geschaltet werden. Zwischen den beiden Schaltungsvarianten kann auch während des Betriebs der Fördervorrichtung ein Wechsel vorgenommen werden. So können beispielsweise die Fördereinrichtungsgruppen zunächst einzeln aktiviert werden, wodurch zunächst nur jeweils eine der jeweiligen Fördereinrichtungsgruppe zugeordnete Anzahl an Fördereinrichtungen aktiviert wird, um so einen bestimmten Flüssigkeitsmassenstrom zu fördern. Soll nun der gefördert Flüssigkeitsmassenstrom erhöht werden, können für den weiteren Betrieb der Fördervorrichtung Gruppen zu beispielsweise jeweils zwei Fördereinrichtungsgruppen gebildet werden, die dann gemeinsam aktiviert werden. Dementsprechend werden dann jeweils auch alle Fördereinrichtungen, die den gemeinsam aktivierten Fördereinrichtungsgruppen zugeordnet sind, aktiviert.

Vorzugsweise werden die Zeitabschnitte gleich lang gewählt. Einerseits wird hierdurch eine gleichmäßige zeitliche Belastung aller Fördereinrichtungen gewährleistet. Andererseits ist bei Wahl gleich langer Zeitabschnitte eine Überwachung der geleisteten aktiven Betriebszeit einer jeden Fördereinrichtung in einfacher Weise durch Summation der geleisteten Zeitabschnitte möglich.

In einer alternativen Ausgestaltung des Verfahrens kann es aber auch zweckmäßig sein, die Zeitabschnitte unterschiedlich lang zu wählen. Dies ist insbesondere dann sinnvoll; wenn die Belastungen der Fördereinrich-, tungsgruppen oder der Förderelemente variieren. Die Zeitintervalle werden dann vorteilhaft so gewählt, dass sich eine für alle Förderelemente gleiche Gesamtbelastung einstellt. Dies macht jedoch eine Überwachung, Speicherung und Auswertung der jeweiligen Betriebs- und Belastungszustände für wenigstens eine Fördereinrichtung einer jeden Fördereinrichtungsgruppe der Fördervorrichtung erforderlich.

In einer vorteilhaften Weiterbildung des Verfahrens wird die Anzahl der Fördereinrichtungsgruppen und/oder die Anzahl der Fördereinrichtungen je Fördereinrichtungsgruppe und/oder die Zuordnung der Fördereinrichtungen zu den Fördereinrichtungsgruppen als Funktion des zu fördernden Flüssigkeitsmassenstroms festgelegt. Üblicherweise erfolgt die Festlegung zu Beginn des Betriebs der Fördervorrichtung. Wird aber der Flüssigkeitsmassenstrom verändert, so kann zweckmäßig die Anzahl der Fördereinrichtungsgruppen und/oder die Anzahl der Fördereinrichtungen je Fördereinrichtungsgruppe und/oder die Zuordnung der Fördereinrichtungen zu den Fördereinrichtungsgruppen an den veränderten Flüssigkeitsmassenstrom auch während des Betriebs der der Fördereinrichtungsgruppen und/oder die Anzahl der Fördereinrichtungen je Fördereinrichtungsgruppe und/oder die Zuordnung der Fördereinrichtungen zu den Fördereinrichtungsgruppen an den veränderten Flüssigkeitsmassenstrom auch während des Betriebs der Fördervorrichtung neu festgelegt werden.

In einer vorteilhaften Ausgestaltung des Verfahrens wird wenigstens eine der Fördereinrichtungen mehreren Fördereinrichtungsgruppen zugeordnet. Bevorzugt wird jede Fördereinrichtung der Fördervorrichtung wenigstens zwei Fördereinrichtungsgruppen zugeordnet. Durch die Zuordnung der Fördereinrichtungen zu mehreren Fördereinrichtungsgruppen kann der apparative Aufwand dadurch reduziert werden, dass insgesamt weniger Fördereinrichtungen vorzusehen sind, als in Summe den Fördereinrichtungsgruppen zugeordnet werden.

Gemäß der Erfindung umfasst die Fördervorrichtung N Fördereinrichtungen, wobei die N Fördereinrichtungen der Fördervorrichtung N Fördereinrichtungsgruppen mit jeweils N-1 Fördereinrichtungen zugeordnet werden. Wird nun rollierend jeweils eine Fördereinrichtungsgruppe aktiv geschaltet, so befindet sich ebenfalls in rollierender Reihenfolge jeweils eine Fördereinrichtung in dem Ruhemodus. Erfolgt der Betrieb der Fördervorrichtung in dieser Weise, so wird die Lebensdauer der Fördereinrichtungen minimal um den N-ten Teil der Einzellebensdauer einer einzelnen Fördereinrichtung verlängert. Werden die Ruhemodi zur Wartung oder zum Tausch der jeweiligen Fördereinrichtung genutzt, so kann die Fördervorrichtung auch dauerhaft ohne Unterbrechung betrieben werden.

Gemäß einer weiteren vorteilhaften Weiterbildung des erfindungsgemäßen Verfahrens wird der zu fördernde

Des Weiteren wird zweckmäßig eine Ansteuerung der Zerstäubungselemente oder der Zerstäubungselementgruppen, über die der Flüssigkeitsmassenstrom in die Hauptströmung eingebracht wird, wie beispielsweise ein Zuschalten oder Abschalten der Zerstäubungselemente oder der Zerstäubungselementgruppen, synchron zu den Förderleistungen der Fördereinrichtungen geregelt. Die Steuerung erfolgt zweckmäßig mittels einer zentralen Steuerung der Fördervorrichtung.

Das erfindungsgemäße Verfahren kann aber auch dazu genutzt werden, um eine höhere Betriebssicherheit gegen den Ausfall einer oder mehrerer Fördereinrichtungen sicherzustellen. In diesem Fall wird bei unvorhergesehenem Ausfall einer oder mehrerer Fördereinrichtungen diejenige Fördereinrichtungsgruppe aktiv geschaltet, der die ausgefallene Fördereinrichtung oder die ausgefallenen Fördereinrichtungen nicht zugeordnet ist/sind.

Dabei bedarf das Verfahren einer Fördervorrichtung zum kontinuierlichen Fördern eines Flüssigkeitsmassenstroms, der in eine Hauptströmung einer Gasturbogruppe eingebracht werden soll. In einer bevorzugten Ausgestaltung wird der geförderte Flüssigkeitsmassenstrom in eine Eintrittsströmung eines Verdichters der Gasturbogruppe eingebracht.

Die Fördervorrichtung umfasst hierzu eine Zulaufleitung, eine Förderleitung, eine Mehrzahl von Fördereinrichtungen zum Fördern des Flüssigkeitsmassenstroms aus der Zulaufleitung in die Förderleitung, sowie wenigstens ein mit der Förderleitung kommunizierendes Zerstäubungselament. Die Fördereinrichtungen sind parallel zueinander angeordnet. Ferner umfasst die Fördervorrichtung ein Mittel zur Zuordnung der Fördereinrichtungen zu wenigstens zwei Fördereinrichtungsgruppen sowie ein Mittel zur rollierenden zeitabschnittsweisen Aktivierung der Fördereinrichtungsgruppen mit den jeweils zugeordneten Fördereinrichtungen.

Zur Eindüsung in eine Hauptströmung eines Verdichters wird als Flüssigkeit üblicherweise demineralisiertes Wasser verwendet. Neben Wasser kann als Flüssigkeit aber auch ein Gemisch aus Wasser und einem weiteren Zusatzstoff oder auch eine andere geeignete Flüssigkeit verwendet werden.

Unter dem Begriff "Einbringen einer Flüssigkeit" ist sowohl ein Eindüsen oder Zerstäuben der Flüssigkeit als auch ein Einspritzen oder sonstiges Injizieren der Flüssigkeit in eine Hauptströmung zu verstehen.

Das Einbringen der Flüssigkeit in die Hauptströmung erfolgt hierbei nichtintermittierend, d.h. kontinuierlich. Das Zerstäubungselement umfasst demgemäss keine Verschlussmittel zum Verschließen einer Durchtrittsöffnung des Zerstäubungselements, durch die die Flüssigkeit aus dem Zerstäubungsmittel in die Hauptströmung eingebracht wird. Solche Verschlussmittel sind aus dem Stand der Technik bekannt, um die Durchtrittsöffnung intermittierend öffnen und wieder schließen zu können, um so die Flüssigkeit intermittierend in die Hauptströmung einzubringen.

Jede Fördereinrichtung umfasst zweckmäßig weinigstens eine Pumpe. Aufgrund ihrer Betriebscharakteristik eignen sich insbesondere Kolbenpumpen zur Verwendung als Fördereinrichtungen. Mittels Kolbenpumpen ist es möglich, einen verhältnismäßig kleinen Massenstrom der Flüssigkeit auf einen hohen Druck zu fördern. Somit kann ein hoher Druck der Flüssigkeit in der Zulaufleitung realisiert werden. Insbesondere bei Druckzerstäubern ist ein hoher Vordruck der Flüssigkeit in der Zulaufleitung erforderlich, um eine gute Verdüsungsqualität der Flüssigkeit zu erzielen.

Gemäss einer vorteilhaften Ausgestaltung der Fördervorrichtung sind das Mittel zur Zuordnung der Fördereinrichtungen zu den wenigstens zwei Fördereinrichtungsgruppen sowie das Mittel zur rollierenden zeitabschnittsweisen Aktivierung der Fördereinrichtungsgruppen mit den jeweils zugeordneten Fördereinrichtungen in einer Steuerung der Fördervorrichtung integriert.

In einer zweckmäßigen Weiterbildung umfasst die Fördervorrichtung ferner wenigstens ein Drosselelement, wobei das Drosselelement in der Förderleitung zwischen den Fördereinrichtungen und dem wenigstens einen Zerstäubungselement angeordnet ist.

Vorteilhaft wird das wenigstens eine Drosselelement mittels der Steuerung der Fördervorrichtung gesteuert.

Ferner umfasst die Fördervorrichtung zweckmäßig eine Mehrzahl, von Zerstäubungselementgruppen mit jeweils wenigstens einem Zerstäubungselement. Jede Zerstäubungselementgruppe ist über eine EinzelFörderleitung mit der Förderleitung verbunden. Des Weiteren ist bevorzugt in jeder Einzel-Förderleitung zwischen der Förderleitung und dem wenigstens einen Zerstäubungselement der Zerstäubungselementgruppe ein Drosselelement angeordnet.

In einer bevorzugten Ausgestaltung ist das wenigstens eine Zerstäubungselement als Druckzerstäuberdüse ausgeführt.

Alternativ kann das wenigstens eine Zerstäubungselement aber auch als hilfsmedienunterstützte Düse, beispielsweise als luftunterstützte Zerstäubungsdüse, als sogenannter Airblast-Zerstäuber, ausgeführt sein. Umfasst die Fördervorrichtung mehrere Düsen, so sind diese Düsen vorzugsweise alle einem Typus entsprechend ausgeführt.

In einer weiteren zweckmäßigen Ausgestaltung der Erfindung sind die Zerstäubungselemente auf einem Düsenträger angeordnet. Es können, aber auch mehrere Düsenträger vorgesehen sein, auf denen die Zerstäubüngselemente verteilt angeordnet sind.

Die Fördervorrichtung wird besonders zweckmäßig gemäss dem oben beschriebenen, erfindungsgemäßen Verfahren betrieben.

### Kurze Beschreibung der Zeichnungen

Die Erfindung wird nachfolgend anhand eines in den Figuren illustrierten Ausführungsbeispiels näher erläutert. Es zeigen:
Figur 1 eine Ausführungsform des erfindungsgemäßen Verfahrens als Ablaufschema;
Figur 2 eine ausgeführte Fördervorrichtung des erfindungsgemäßen Verfahrens zur Verwendung in einer Wassereinspritzanlage einer Gasturbogruppe;
Figur 3 eine vereinfachte Darstellung einer Gasturbine mit Wassereinspritzung.

In den Figuren sind nur die für das Verständnis der Erfindung wesentlichen Elemente und Bauteile dargestellt.
Die dargestellten Ausführungsbeispiele sind rein instruktiv zu verstehen und sollen einem besseren Verständnis dienen, jedoch nicht als Einschränkung des Erfindungsgegenstandes verstanden werden.

### Wege zur Ausführung der Erfindung

In Figur ist eine Ausführungsform des erfindungsgemäßen Verfahrens als Ablaufschema dargestellt. Das Verfahren dient zum Betreiben einer Fördervorrichtung, wobei die hier betrachtete Fördervorrichtung fünf Fördereinrichtungen umfasst. Jede Fördereinrichtung umfasst hier lediglich jeweils eine Kolbenpumpe. Grundsätzlich können innerhalb einer Fördereinrichtung aber auch mehrere Pumpen vorgesehen und beispielsweise in Reihe zueinander geschaltet sein. Die Fördereinrichtungen sind parallel zueinander geschaltet, d.h. jede Fördereinrichtung kommuniziert unmittelbar zulaufseitig mit einer Zulaufleitung der Fördervorrichtung und förderseitig mit einer Förderleitung der Fördervorrichtung.

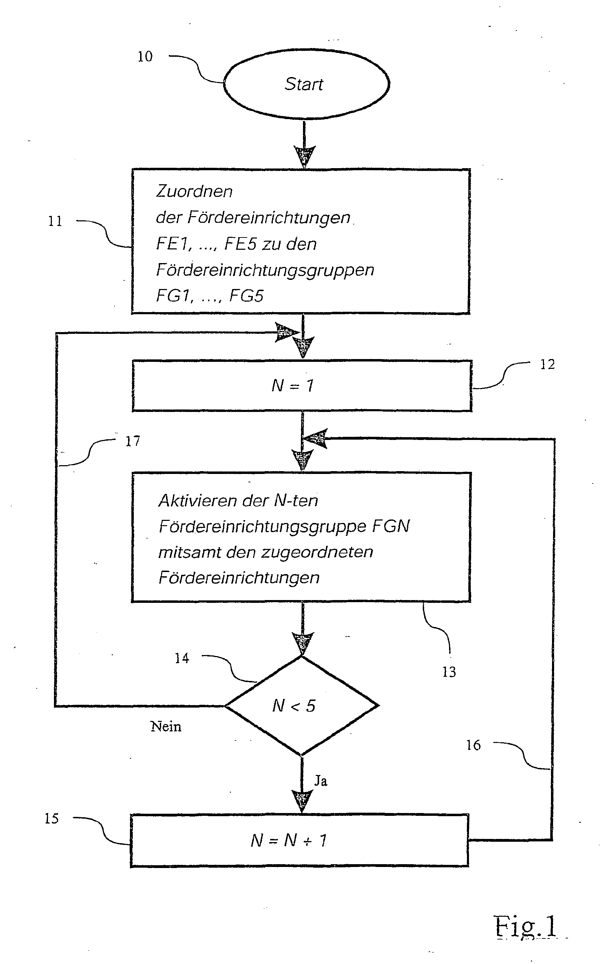

Im Wesentlichen untergliedert sich das in Figur 1 dargestellte Verfahren in zwei zentrale Verfahrensschritte. Nach einem Starten des Verfahrens (Verfahrenschritt 10 in Figur 1) werden in Verfahrensschritt 11 die fünf Fördereinrichtungen FE1, FE2, FE3, FE4 und FE5 der Fördervorrichtung fünf Fördereinrichtungsgruppen FG1, FG2, FG3, FG4 und FG5 zugeordnet. Jeder Fördereinrichtungsgruppe FG1, FG2, FG3, FG4 und FG5 werden vier Fördereinrichtungen zugeordnet. So werden beispielsweise der ersten Fördereinrichtungsgruppe FG1 die Fördereinrichtungen FE1, FE2, FE3 und FE4, der zweiten Fördereinrichtungsgruppe FG2 die Fördereinrichtungen FE2, FE3, FE4 und FE5, der dritten Fördereinrichtungsgruppe FG3 die Fördereinrichtungen FE3, FE4, FE5 und FE1, der vierten Fördereinrichtungsgruppe FG4 die Fördereinrichtungen FE4, FE5, FE1 und FE2 und der fünften Fördereinrichtungsgruppe FG5 die Fördereinrichtungen FE5, FE1, FE2 und FE3 zugeordnet.

Nach dem Zuordnen der Fördereinrichtungen zu den Fördereinrichtungsgruppen wird eine Zählvariable N auf 1 gesetzt (Verfahrensschritt 12 in Figur 1). In einem weiteren Verfahrensschritt 13 werden die Fördereinrichtungsgruppen FG1 bis FG5 mit den jeweils zugeordneten Fördereinrichtungen rollierend zeitabschnittsweise aus einem Ruhemodus aktiv geschaltet. Entsprechend der Zählvariablen N wird hier jeweils die N-te Fördereinrichtungsgruppe mit den jeweils zugeordneten Fördereinrichtungen zu Beginn eines Zeitabschnitts aus dem Ruhemodusaktiv geschältet und am Ende des Zeitabschnitts wieder in den Ruhemodus geschaltet. Nach dem Ende des Zeitabschnitts wird zunächst der aktuelle Zählwert der Zählvariable N überprüft (Verfahrensschritt 14). Ist die Zählvariable N kleiner 5, so wird die Zählvariable N um 1 erhöht (Verfahrensschritt 15). Danach erfolgt ein Rücksprung 16 zu Verfahrensschritt 13 und ein erneuter Durchlauf des Verfahrensschritts 13. Hat die Zählvariable N jedoch bereits den Wert 5 erreicht, so wird die Zählvariable N durch den Rücksprung 17 in Verfahrensschritt 12 wieder auf den Wert 1 zurückgesetzt. Anschließend wird auf Basis der zurückgesetzten Zählvariable N erneut der Verfahrensschritt 13 durchlaufen.

Der Flüssigkeitsmassenstrom wird somit rollierend jeweils mittelsderjenigen Fördereinrichtungen, die der für den jeweiligen Zeitabschnitt aktiv geschalteten Fördereinrichtungsgruppe zugeordnet sind, gefördert. Gleichzeitig bedeutet dies, dass sich in rollierender Reihenfolge zu jedem Zeitabschnitt jeweils eine Fördereinrichtung in dem Ruhemodus befindet. In dem in Figur dargestellten Ausführungsbeispiel ist dies jeweils diejenige Fördereinrichtung FE1 bis FE5, die der jeweils aktiven Fördereinrichtungsgruppe FG1 bis FG5 nicht zugeordnet ist.

Die Zeitabschnitte sind zweckmäßig gleich lang gewählt. Um eine Zeitsteuerung mit jeweils gleich langen, Zeitabschnitten zu realisieren, ist lediglich eine Zeitzähleinheit als Steuerung erforderlich. Ferner ist hierdurch in guter Näherung, eine gleichverteilte Belastung der Fördereinrichtungen gewährleistet. Alternativ hierzu könnten die Belastungen der Fördereinrichtungen auch messtechnisch erfasst, gespeichert und dahingehend ausgewertet werden, um unter der Vorgabe einer Gleichverteilung der Belastung der Fördereinrichtungen individuelle Zeitabschnitte zu ermitteln.

Das in Figur 1 dargestellte Verfahren gemäß der Erfindung wird besonders zweckmäßig zum Betreiben einer Fördervorrichtung, mit der ein Flüssigkeitsmassenstrom kontinuierlich gefördert wird, um den Flüssigkeitsmassenstrom in einer nichtintermittierenden Betriebsweise in eine Hauptströmung einer Gasturbogruppe einzubringen, angewandt. Vorzugsweise wird der Flüssigkeitsmassenstrom in eine Eintrittsströmung eines Verdichters der Gasturbogruppe eingebracht. Die Fördervorrichtung ist demzufolge als Teil der Gasturboanlage ausgeführt. Oftmals wird es somit zweckmäßig sein, die Fördervorrichtung über eine zentrale Steuereinheit der Gasturboanlage zu steuern.

Dadurch, dass je Zeitabschnitt wenigstens eine Fördereinrichtung in dem Ruhemodus betrieben wird und diese wenigstens eine Fördereinrichtung somit in diesem Zeitabschnitt keine Alterung und keinen Verschleiß erfährt, lässt sich die Standzeit der Fördervorrichtung verlängern. Die Verlängerung der Standzeit der Fördervorrichtung entspricht minimal dem Zeitanteil, den die Fördereinrichtungen im Ruhemodus betrieben werden. Werden jedoch die Fördereinrichtungen jeweils in den Zeitabschnitten gewartet oder ausgetauscht, während derer die jeweilige Fördereinrichtung im Ruhemodus betrieben wird, so kann die Standzeit der Fördervorrichtung aber auch darüber hinaus ausgedehnt werden.

Dies ist insbesondere bei Verwendung von Kolbenpumpen von besonderem Interesse, da Kolbenpumpen aufgrund der während des Betriebs auftretenden hohen mechanischen Belastungen üblicherweise nur vergleichsweise geringe Standzeiten aufweisen. Nach Ablauf einer Standzeit müssen die Kolbenpumpen dann entweder gewartet oder komplett ausgetauscht werden, was zu einem häufigen Betriebsstillstand herkömmlicher Gasturboanlagen führt. Mittels dem erfindungsgemäßen Verfahren wird die Betriebsdauer der Fördervorrichtung nicht mehr durch die maximale Standzeit der Fördereinrichtungen begrenzt.

Ferner kann in demjenigen Zeitabschnitt, in dem eine Fördereinrichtung in dem Ruhemodus betrieben wird, diese Fördereinrichtung gewartet oder ausgetauscht werden. Somit ist es möglich, die Fördervorrichtung dauerhaft zu betreiben, ohne den Betrieb der Fördervorrichtung zur Wartung einzelner Fördereinrichtungen unterbrechen zu müssen.

In einer weiteren zweckmäßigen Ausgestaltung des erfindungsgemäßen Verfahrens kann bei unvorhergesehenem Ausfall einer der Fördereinrichtungen eine derjenigen Fördereinrichtungsgruppen aktiv geschaltet werden, der die ausgefallene Fördereinrichtung nicht zugeordnet ist. Hierdurch ist die Möglichkeit geschaffen, die Fördervorrichtung auch bei Ausfall einer oder mehrere Fördereinrichtungen ohne Einschränkungen weiterzubetreiben. Insbesondere kann hierdurch auch eine Beeinträchtigung des Betriebs der Gasturboanlage bei Ausfall einer oder auch mehrerer " fördereinrichtungen vermieden werden.

Die Anzahl der Fördereinrichtungsgruppen und die Zuordnung der Fördereinrichtungen zu den Fördereinrichtungsgruppen kann auch von der in Figur 1 dargestellten Ausführung abweichen. Beispielsweise können jeder Fördereinrichtungsgruppe nur drei Fördereinrichtungen zugeordnet sein. Die Fördereinrichtungsgruppen können dann zeitabschnittsweise einzeln nacheinander aktiviert werden. Um den geförderten Flüssigkeitsmassenstrom zu erhöhen, kann es dann aber auch zweckmäßig sein, innerhalb jeweils eines Zeitabschnitts mehrere Fördereinrichtungsgruppen mitsamt den zugeordneten Fördereinrichtungen zu aktivieren. Alternativ oder auch ergänzend können zur Erhöhung des geförderten Flüssigkeitsmassenstroms aber auch die Förderleistungen der Fördereinrichtungen erhöht werden.

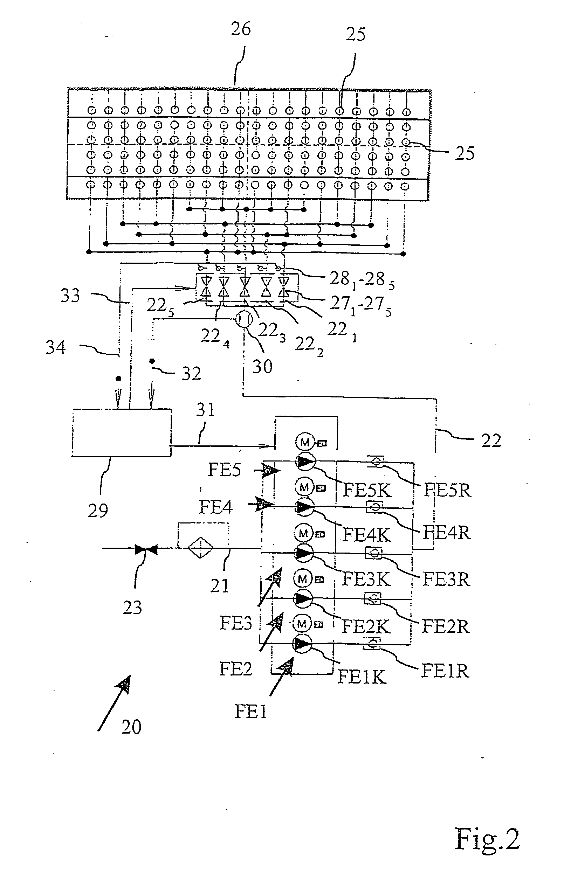

Figur 2 zeigt eine ausgeführte Fördervorrichtung 20 des erfindungsgemäßen Verfahrens zur Verwendung in einer Wassereinspritzanlage einer Gasturbogruppe. Die Fördervorrichtung 20 umfasst eine Zulaufleitung 21, eine Förderleitung 22 sowie fünf parallel zueinander angeordnete Fördereinrichtungen FE1 bis FE5 zum Fördern eines Wassermassenstroms aus der Zulaufleitung 21 in die Förderleitung 22. Um jede der parallel zueinander angeordneten Fördereinrichtungen FE1, bis FE5 mit der Zulaufleitung 21 und der Förderleitung 22 zu verbinden, unterteilen sich die Zulaufleitung 21 und die Förderleitung 22 jeweils in fünf Einzelleitungen. In Figur 2 nicht dargestellt ist, dass die Zulaufleitung 21 hierzu an dem den Fördereinrichtungen FE1 bis FE5 abgewandten Ende mit einem Vorratstank verbunden ist, in dem demineralisiertes Wasser bevorratet ist. In der Zulaufleitung ist zur Regelung des Zulaufs des Weiteren ein Drosselelement 23 vorgesehen.

Die Förderleitung 22 wiederum ist mit einer Vielzahl von Zerstäubungelementen verbunden. Die Zerstäubungselemente sind in der hier dargestellten Ausführungsform alle auf einem Düsenträger 26 angeordnet sind. Als Zerstäubungselemente kommen in der in Figur 2 dargestellten Anordnung Druckzerstäuberdüsen 26 zum Einsatz, die zu jeweils in Reihen angeordneten Gruppen zusammengefasst sind. Zur Anbindung der Förderleitung an die in Gruppen angeordneten Druckzerstäuberdüsen 26 verzweigt die Förderleitung 22 in Einzel-Förderleitungen 22₁, 22₂, 22₃, 22₄ und 22₅. Ferner sind in die Einzel-Förderleitungen 22₁, 22₂, 22₃, 22₄ und 22₅ zusätzlich jeweils Drosselelemente, hier elektrisch angesteuerte Ventile 27₁, 27₂, 27₃, 27₄ und 27₅, angeordnet. Mittels der Ventile 27₁, 27₂, 27₃, 27₄ und 27₅ können die in Gruppen zusammengefassten Düsen gruppenweise zu- oder abgeschalten werden. Auch kann hiermit der in den Einzel-Förderleitungen an den Düsen anliegende Vordruck individuell geregelt werden. In Strömungsrichtung hinter den Drosselelementen sind in den Einzel-Förderleitungen 22₁, 22₂, 22₃, 22₄ und 22₅ ferner jeweils Druckmesssensoren 28₁, 28₂, 28₃, 28₄ und 28₅ angeordnet, die den Flüssigkeitsdruck in den Einzel-Förderleitungen 22₁, 22₂, 22₃, 22₄ und 22₅ messen und an eine Steuerung 29 der Fördervorrichtung 20 übermitteln. Stromauf der Verzweigung der Förderleitung 22 in die EinzelFörderleitungen 22₁, 22₂, 22₃, 22₄ und 22₅ ist hier zusätzlich eine Massenstrommessstelle 30 in der Förderleitung 22 angeordnet. Hiermit kann der Gesamtmassenstrom in der Förderleitung 22 gemessen und an die Steuerung 29 übermittelt werden.

Die Fördereinrichtungen FE1 bis FE5 umfassen hier jeweils eine elektrisch angetriebene Kolbenpumpe FE1 K bis FE5K sowie ein in Strömungsrichtung hinter der Pumpe angeordnetes Rückschlagventil FE1 R bis FE5R.

Die erfindungsgemäß ausgeführte Fördervorrichtung umfasst des Weiteren ein Mittel zur Zuordnung der Fördereinrichtungen zu den Fördereinrichtungsgruppen sowie ein Mittel zur rollierenden, zeitabschnittsweisen Aktivierung der Fördereinrichtungsgruppen mitsamt den jeweils zugeordneten Fördereinrichtungen. Die Mittel zur Zuordnung der Fördereinrichtungen zu den Fördereinrichtungsgruppen sowie zur rollierenden zeitabschnittsweisen Aktivierung der Fördereinrichtungsgruppen mit den jeweils zugeordneten Fördereinrichtungen umfassen wenigstens ein Speicherelement, einen Prozessor sowie Ein- und Ausgabeelemente und sind in Figur 2 in der Steuerung integriert. Die Steuerung kommuniziert über die Datenleitung 31 mit den Fördereinrichtungen und über die Datenleitungen 32, 33, 34 mit der Massenstrommessstelle 30, den Ventilen 27₁ bis 27₅ sowie den Druckmessstellen 28₁ bis 28₅.

Der Betrieb der in Figur 2 dargestellten Fördervorrichtung erfolgt zweckmäßig gemäß dem in Figur 1 dargestellten Verfahren. In einem ersten Verfahrensschritt ordnet das in die Steuerung integrierte Mittel zur Zuordnung der Fördereinrichtungen die Kolbenpumpen den Fördereinrichtungsgruppen zu. Dies kann beispielsweise so erfolgen, dass insgesamt fünf Fördereinrichtungsgruppen zu je vier Fördereinrichtungen gebildet werden. Die erste Fördereinrichtungsgruppe umfasst die Fördereinrichtungen FE1 bis FE4, die zweite Fördereinrichtungsgruppe die Fördereinrichtungen FE2 bis FE5, etc.. In einem weiteren Verfahrensschritt, dem eigentlichen Förderbetrieb, werden die Fördereinrichtungsgruppen dann mittels dem Mittel zur rotierenden, zeitabschnittsweisen Aktivierung der Fördereinrichtungsgruppen rollierend zeitabschnittsweise aktiv geschaltet. Dies kann beispielsweise in der Weise erfolgen, dass für die ersten 500 Betriebsstunden die erste Fördereinrichtungsgruppe aus einem Ruhemodus aktiviert wird, so dass das in die Hauptströmung einzubringende Wasser mittels der mung einzubringende Wasser mittels der Fördereinrichtungen FE1 bis FE4 gefördert wird. Nach Ablauf der 500 Betriebsstunden wird die erste Fördereinrichtungsgruppe deaktiviert, d.h. in einen Stand-By-Modus geschaltet. Gleichzeitig mit der Deaktivierung der ersten Fördereinrichtungsgruppe wird die zweite Fördereinrichtungsgruppe aktiv geschaltet. Die Fördereinrichtungen FE2 bis FE5 der zweiten Fördereinrichtungsgruppe fördern sodann in einem Zeitfenster von 500 Betriebsstunden bis 1000 Betriebsstunden der Fördervorrichtung, etc.. Bei Deaktivierung der fünften Fördereinrichtungsgruppe wird wieder die erste Fördereinrichtungsgruppe aktiviert und der Zyklus neuerlich gestartet.

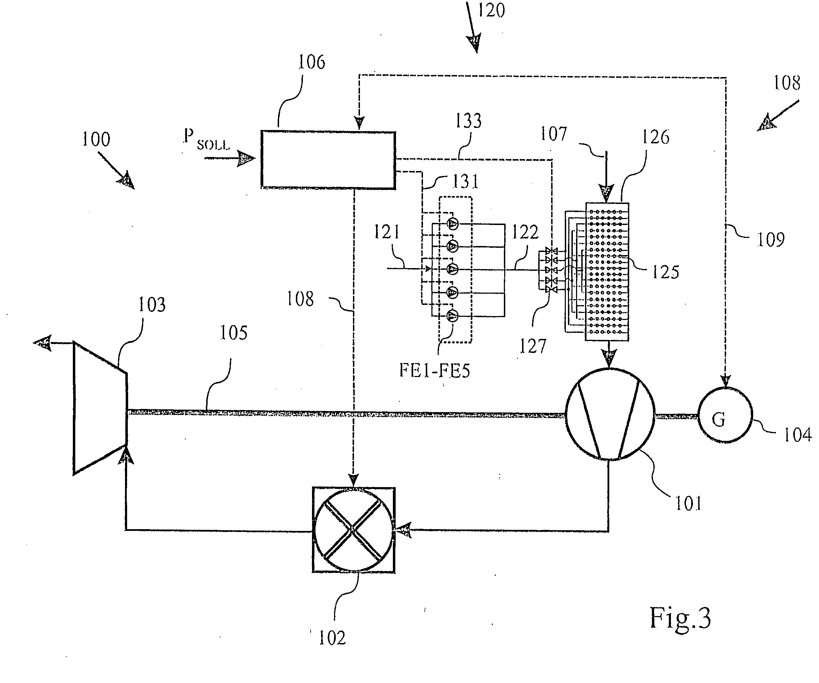

In Figur 3 ist in einer schematisierten Darstellung eine Gasturbine 100 dargestellt, wie sie dem Fachmann geläufig ist und häufig beispielsweise zur Stromerzeugung oder für stationäre oder mobile Antriebe, wie beispielsweise Flugzeugantriebe, Verwendung findet. Die beispielhaft dargestellte Gasturbine 100 umfasst als wesentliche Baugruppen einen Verdichter 101, eine Brennkammer 102 sowie eine Turbine 103. In dem Verdichter 102 wird eintretende Umgebungsluft verdichtet und der Brennkammer 102 zugeführt. In der Brennkammer 102 wird der verdichteten Luft Brennstoff beigemischt und das Gemisch verbrannt. In der Turbine 103 wird das in der Brennkammer 102 erzeugte Heissgas arbeitsleistend entspannt, wobei die Turbine 103 der hier dargestellten stationären Anlage über die Welle 105 neben dem Verdichter 101 zusätzlich einen Leistungsverbraucher, hier einen Generator 104 zur Stromerzeugung, antreibt. Turbine, Verdichter und Generator sind über eine Welle 105 miteinander verbunden.

Zur Steigerung der Leistung der Gasturbine ist hier im Bereich des Verdichtereintritts des weiteren eine Wassereinspritzvorrichtung 108 zur Einbringung von Wasser in die Eintrittsströmung 107 des Verdichters angeordnet. Die Wassereinspritzvorrichtung 108 umfasst eine wie in Figur 2 dargestellte Fördervorrichtung 120. Die Fördervorrichtung 120 umfasst eine Zulaufleitung 121, eine Förderleitung 122, fünf Pumpen FE1 bis FE5, Ventile 127 sowie einen Düsenträger 126 mit einer Vielzahl von Einzeldüsen 125. Die Einzeldüsen 125 sind jeweils in Gruppen zusammengefasst und münden in die Eintrittsströmung 107 des Verdichters 101 ein.

Gemäß Figur 3 sind die Mittel zur Zuordnung der Fördereinrichtungen sowie die Mittel zur rollierenden zeitabschnittsweisen Aktivierung der Fördereinrichtungsgruppen mit den jeweils zugeordneten Fördereinrichtungen in der zentralen Gasturbinensteuerung 106 integriert.
Der zentralen Steuerung 106 wird eine Soll-Leistungs-Vorgabe Pₛₒₗₗ als Vorgabewert vorgegeben. Aus der Soll-Leistungs-Vorgabe Pₛₒₗₗ wird von der Steuerung 106 ein der Brennkammer zuzuführender Brennstoffmassenstrom errechnet und über die Datenleitung übermittelt. Weiterhin wird von der zentralen Gasturbinensteuerung aus der Soll-Leistungs-Vorgabe Pₛₒₗₗ der Flüssigkeitsmassenstrom ermittelt, der zur Steigerung der Leistung der Gasturbogruppe in die Eintrittsströmung 107 des Verdichters 101 einzubringen, ist. Hieraus wird dann die Anzahl der Fördereinrichtungsgruppen und/oder die Anzahl der Fördereinrichtungen je Fördereinrichtungsgruppe und/oder die Zuordnung der Fördereinrichtungen zu den Fördereinrichtungsgruppen als Funktion des zu fördernden Flüssigkeitsmassenstroms festgelegt und über die Datenleitungen 131 und 133 an die Pumpen FE1 bis FE5 sowie die Ventile 127 übermittelt. Der weitere Betrieb der Fördervorrichtung 120 entspricht dann den Ausführungen zu Figur 2.

Selbstverständlich ist es auch möglich, die in Figur 3 dargestellte Gasturbine mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und stellen die Erfindung lediglich in einen anwendungsrelevanten Kontext, weshalb sie an dieser Stelle nicht weiter beschrieben werden.

Das im Zusammenhang mit Figur 2 beschriebene Verfahren sowie die in den Figuren 2 und 3 dargestellten Fördervorrichtungen stellen beispielhafte Ausführungsformen der Erfindung dar, die von einem Fachmann durchaus in vielfältiger Weise ohne Weiteres modifiziert werden können, ohne den Erfindungsgedanken hierdurch zu verlassen.

### Bezugszeichenliste

- 10 bis 15: Verfahrensschritt
- 16, 177: Verfahrensrücksprung
- 20: Fördervorrichtung
- 21: Zulaufleitung
- 22: Förderleitung
- 22₁ bis 22₅: Einzel-Förderleitung
- 23: Drosselelement
- 25: Düsen
- 26: Düsenträger
- 27₁ bis 27₅: Ventil
- 28₁ bis 28₅: Druckmesssensoren
- 29: Steuerung
- 30: Massenstrommessstelle
- 31: Datenleitung
- 32: Datenleitung
- 33: Datenleitung
- 34: Datenleitung
- 100: Gasturbogruppe
- 101: Verdichter
- 102: Brennkammer
- 103: Turbine
- 104: Generator
- 105: Welle
- 106: Steuerung der Gasturbogruppe
- 107: Eintrittsströmung
- 108: Wassereinspritzvorrichtung
- 120: Fördervorrichtung
- 121: Zulaufleitung
- 122: Förderleitung
- 125: Düse
- 126: Düsenträger
- 127: Ventile
- 131: Datenleitung
- 133: Datenleitung
- FE1 bis FE5: Fördereinrichtung
- FE1 K bis FE5K: Kolbenpumpe
- FE1 R bis FE5R: Rückschlagventil
- P_{SOLL}: Soll-Leistung

## Patentansprüche

1. Verfahren zum Betreiben einer Fördervorrichtung (20), mit der ein Flüssigkeitsmassenstrom kontinuierlich gefördert wird, um den Flüssigkeitsmassenstrom in eine Hauptströmung einer Gasturbogruppe (100), insbesondere eine Eintrittsströmung eines Verdichters (101) der Gasturbogruppe, einzubringen, wobei die Fördervorrichtung (20) eine Mehrzahl von parallel zueinander geschalteten Fördereinrichtungen (FE1, FE2, FE3, FE4, FE5) umfasst,
das Verfahren umfassend, die Fördereinrichtungen (FE1, FE2, FE3, FE4, FE5) der Fördervorrichtung (20) wenigstens zwei Fördereinrichtungsgruppen (FG1, ... FGN) zuzuordnen, und
die Fördereinrichtungsgruppen (FG1, ... FGN) mit den jeweils zugeordneten Fördereinrichtungen (FE1, FE2, FE3, FE4, FE5) zum Fördern des Flüssigkeitsmassenstroms rollierend zeitabschnittsweise aus einem Ruhemodus aktiv zu schalten, so dass in rollierender Reihenfolge je Zeitabschnitt jeweils wenigstens eine Fördereinrichtung (FE1, FE2, FE3, FE4, FE5) in dem Ruhemodus betrieben wird,
**dadurch gekennzeichnet, dass**
die Fördervorrichtung (20) N Fördereinrichtungen (FE1, FE2, FE3, FE4, FE5) umfasst, und das Verfahren weiterhin umfasst, die N Fördereinrichtungen (FE1, FE2, FE3, FE4, FE5) der Fördervorrichtung (20) N Fördereinrichtungsgruppen (FG1, ... FGN) mit jeweils N-1 Fördereinrichtungen (FE1, FE2, FE3, FE4, FE5) zuzuordnen.

2. Verfahren gemäss Anspruch 1, weiterhin umfassend, die Fördereinrichtungsgruppen (FG1, ... FGN) mit den jeweils zugeordneten Fördereinrichtungen (FE1, FE2, FE3, FE4, FE5) zum Fördern des Flüssigkeitsmassenstroms einzeln und/oder gruppiert nacheinander jeweils zu Beginn eines Zeitabschnitts aus dem Ruhemodus aktiv zu schalten und am Ende des Zeitabschnitts wieder in den Ruhemodus zu schalten.

3. Verfahren gemäss einem der vorhergehenden Ansprüche, weiterhin umfassend, die Zeitabschnitte in Abhängigkeit einer individuellen Belastung der Fördereinrichtungsgruppen (FG1, ... FGN) variabel zu wählen, dass eine gleiche Gesamtbelastung für alle Förderelemente (FE1, FE2, FE3, FE4, FE5) der Fördereinrichtungsgruppen (FG1, ... FGN) erzielt wird.

4. Verfahren gemäss einem der vorhergehenden Ansprüche, weiterhin umfassend, die Anzahl der Fördereinrichtungsgruppen (FG1, FGN) und/oder die Anzahl der Fördereinrichtungen (FE1, FE2, FE3, FE4, FE5) je Fördereinrichtungsgruppe (FG1, ... FGN) und/oder die Zuordnung der Fördereinrichtungen (FE1, FE2, FE3, FE4, FE5) zu den Fördereinrichtungsgruppen (FG1, ... FGN) als Funktion des zu fördernden Flüssigkeitsmassenstroms festzulegen.

5. Verfahren gemäss einem der vorhergehenden Ansprüche, weiterhin umfassend, wenigstens eine der Fördereinrichtungen (FE1, FE2, FE3, FE4, FE5) mehreren Fördereinrichtungsgruppen (FG1, ... FGN) zuzuordnen.

6. Verfahren gemäss einem der vorhergehenden Ansprüche, weiterhin umfassend, den zu fördernden Flüssigkeitsmassenstrom aus einer Soll-Leistungs-Vorgabe der Gasturbogruppe (100) zu ermitteln.

7. Verfahren gemäss einem der vorhergehenden Ansprüche, weiterhin umfassend, die in dem Ruhemodus befindliche Fördereinrichtung (FE1, FE2, FE3, FE4, FE5) oder die in dem Ruhemodus befindliche Fördereinrichtungen (FE1, FE2, FE3, FE4, FE5) während des Ruhemodus zu warten oder auszutauschen.

8. Verfahren gemäss einem der vorhergehenden Ansprüche, weiterhin umfassend, bei unvorhergesehenem Ausfall einer Fördereinrichtung (FE1, FE2, FE3, FE4, FE5) eine Fördereinrichtungsgruppe (FG1, ... FGN) aktiv zu schalten, der die ausgefallene Fördereinrichtung (FE1, FE2, FE3, FE4, FE5) nicht zugeordnet ist.

## Claims

1. Method of operating a delivery apparatus (20) with which a liquid mass flow is continuously delivered in order to introduce the liquid mass flow into a main flow of a gas turboset (100), in particular an inlet flow of a compressor (101) of the gas turboset,
the delivery apparatus (20) comprising a plurality of delivery devices (FE1, FE2, FE3, FE4, FE5) connected parallel to one another,
the delivery devices (FE1, FE2, FE3, FE4, FE5) of the delivery apparatus (20) being assigned to at least two delivery device groups (FG1, ... FGN), and
the delivery device groups (FG1, ... FGN) with the respectively assigned delivery devices (FE1, FE2, FE3, FE4, FE5) being switched to the active state from the rest mode in a rolling manner in time segments in order to deliver the liquid mass flow, so that in each case at least one delivery device (FE1, FE2, FE3, FE4, FE5) is operated in the rest mode in a rolling sequence per time segment,
**characterized in that** the delivery apparatus (20) comprises N delivery devices (FE1, FE2, FE3, FE4, FE5), and the N delivery devices (FE1, FE2, FE3, FE4, FE5) of the delivery apparatus (20) are furthermore assigned to N delivery device groups (FG1, ... FGN) with in each case N-1 delivery devices (FE1, FE2, FE3, FE4, FE5).

2. Method according to Claim 1, the delivery device groups (FG1, ... FGN) with the respectively assigned delivery devices (FE1, FE2, FE3, FE4, FE5) furthermore being switched to the active state from the rest mode individually and/or in groups one after the other in each case at the start of a time segment in order to deliver the liquid mass flow and being switched to the rest mode again at the end of the time segment.

3. Method according to either of the preceding claims, the time segments furthermore being selected in a variable manner as a function of an individual load of the delivery device groups (FG1, ... FGN) such that an identical overall load for all the delivery elements (FE1, FE2, FE3, FE4, FE5) of the delivery device groups (FG1, ... FGN) is achieved.

4. Method according to one of the preceding claims, the number of delivery device groups (FG1, ... FGN) and/or the number of delivery devices (FE1, FE2, FE3, FE4, FE5) per delivery device group (FG1, ... FGN) and/or the assignment of the delivery devices (FE1, FE2, FE3, FE4, FE5) to the delivery device groups (FG1, ... FGN) furthermore being established as a function of the liquid mass flow to be delivered.

5. Method according to one of the preceding claims, at least one of the delivery devices (FE1, FE2, FE3, FE4, FE5) being assigned to a plurality of delivery device groups (FG1, ... FGN) .

6. Method according to one of the preceding claims, the liquid mass flow to be delivered furthermore being determined from a setpoint output selection of the gas turboset (100).

7. Method according to one of the preceding claims, the delivery device (FE1, FE2, FE3, FE4, FE5) which is in the rest mode or the delivery devices (FE1, FE2, FE3, FE4, FE5) which are in the rest mode furthermore being serviced or exchanged during the rest mode.

8. Method according to one of the preceding claims, a delivery device group (FG1, ... FGN) being switched to the active state in the event of an unforeseen failure of a delivery device (FE1, FE2, FE3, FE4, FE5), to which delivery device group (FG1, ... FGN) the failed delivery device (FE1, FE2, FE3, FE4, FE5) is not assigned.

## Revendications

1. Procédé pour faire fonctionner un dispositif de transport (20), avec lequel un flux massique de liquide est transporté en continu, afin d'introduire le flux massique de liquide dans un écoulement principal d'un groupe générateur à turbine à gaz (100), en particulier une ouverture d'entrée d'un compresseur (101) du groupe générateur à turbine à gaz, le dispositif de transport (20) présentant une pluralité de systèmes de transport montés parallèlement les uns aux autres (FE1, FE2, FE3, FE4, FE5), le procédé comprenant les étapes consistant à associer les systèmes de transport (FE1, FE2, FE3, FE4, FE5) du dispositif de transport (20) à au moins deux groupes de systèmes de transport (FG1, ... FGN), et à activer les groupes de systèmes de transport (FG1, ... FGN) avec les systèmes de transport (FE1, FE2, FE3, FE4, FE5) respectivement associés, pour transporter le flux massique de liquide, par roulement en intervalles de temps, à partir d'un mode de repos, de sorte qu'au moins un système de transport (FE1, FE2, FE3, FE4, FE5) fonctionne en mode de repos en succession roulante dans chaque intervalle de temps, **caractérisé en ce que**
le dispositif de transport (20) comprend N systèmes de transport (FE1, FE2, FE3, FE4, FE5), et le procédé comprend en outre les étapes consistant à associer les N systèmes de transport (FE1, FE2, FE3, FE4, FE5) du dispositif de transport (20) à N groupes de systèmes de transport (FG1, ... FGN) ayant chacun N-1 systèmes de transport (FE1, FE2, FE3, FE4, FE5).

2. Procédé selon la revendication 1, comprenant en outre les étapes consistant à activer l'un après l'autre, individuellement et/ou en groupe, à partir du mode de repos, les groupes de systèmes de transport (FG1, ... FGN) avec les systèmes de transport (FE1, FE2, FE3, FE4, FE5) respectivement associés pour transporter le flux massique de liquide à chaque fois au début d'un intervalle de temps et les commuter à nouveau au mode de repos à la fin de l'intervalle de temps.

3. Procédé selon l'une quelconque des revendications précédentes, comprenant en outre l'étape consistant à choisir les intervalles de temps de manière variable, en fonction d'une contrainte individuelle des groupes de systèmes de transport (FG1, ... FGN), de manière à obtenir une contrainte totale identique pour tous les éléments de transport (FE1, FE2, FE3, FE4, FE5) des groupes de systèmes de transport (FG1, ... FGN).

4. Procédé selon l'une quelconque des revendications précédentes, comprenant en outre l'étape consistant à fixer le nombre des groupes de systèmes de transport (FG1, ... FGN) et/ou le nombre des systèmes de transport (FE1, FE2, FE3, FE4, FE5) pour chaque groupe de systèmes de transport (FG1, ... FGN), et/ou l'affectation des systèmes de transport (FE1, FE2, FE3, FE4, FE5) aux groupes de systèmes de transport (FG1, ... FGN) en fonction du flux massique de liquide à refouler.

5. Procédé selon l'une quelconque des revendications précédentes, comprenant en outre l'étape consistant à associer au moins l'un des systèmes de transport (FE1, FE2, FE3, FE4, FE5) à plusieurs groupes de systèmes de transport (FG1, ... FGN).

6. Procédé selon l'une quelconque des revendications précédentes, comprenant en outre l'étape consistant à déterminer le flux massique de liquide à refouler à partir d'une valeur de consigne de puissance préalable du groupe générateur à turbine à gaz (100).

7. Procédé selon l'une quelconque des revendications précédentes, comprenant en outre l'étape consistant à attendre ou à remplacer le système de transport (FE1, FE2, FE3, FE4, FE5) se trouvant en mode de repos ou les systèmes de transport (FE1, FE2, FE3, FE4, FE5) se trouvant en mode de repos pendant le mode de repos.

8. Procédé selon l'une quelconque des revendications précédentes, comprenant en outre, en cas de panne imprévue d'un système de transport (FE1, FE2, FE3, FE4, FE5), l'étape consistant à activer un groupe de systèmes de transport (FG1, ... FGN) auquel n'est pas associé le système de transport (FE1, FE2, FE3, FE4, FE5) tombé en panne.
